# EUROPEAN PATENT APPLICATION

(11) **EP 4 266 629 A1**
(43) Date of publication of application: **25.10.2023**
(21) Application number: 23162594.8
(22) Date of filing: 17.03.2023
(51) Int. Cl.: H04L 9/40, H04L 9/32, H04W 4/40

(54) **ONE-TIME CODE GENERATION APPARATUS**

(30) Priority: 22.04.2022 JP 2022071049
(71) Applicant: Suzuki Motor Corporation, Hamamatsu-shi, Shizuoka 432-8611 (JP)
(72) Inventor: AKITA, Akira, HAMAMATSU-SHI, 432-8611 (JP); MAEDA, Genki, HAMAMATSU-SHI, 432-8611 (JP)
(74) Representative: Plasseraud IP

(57) **Abstract**

[Problem to be Solved] To efficiently generate a highly secure one-time code.

[Solution] A one-time code generation apparatus is provided in a subject vehicle 1, and includes an acquisition unit 180 for acquiring information of at least one of a peripheral vehicle and a roadside unit present in a periphery of the subject vehicle, and a one-time code generation unit 150 for generating a one-time code using the information that is acquired by the acquisition unit.

## Description

### [Technical Field]

The present invention relates to a one-time code generation apparatus.

### [Background Art]

Patent Literature 1 discloses an authentication system including an authentication server, a user terminal, and an appliance, the authentication system for performing authentication for enabling control of the appliance by the user terminal. In the authentication system, the authentication server and the appliance generate a common one-time password based on time, the authentication server transmits the one-time password that the authentication server generated to the user terminal, the user terminal transmits the one-time password that is received from the authentication server to the appliance, and the appliance receives control from the user terminal in a case in which the one-time password received from the user terminal matches the one-time password that the appliance generated.

### [Citation List]

### [Patent Literature]

[Patent Literature 1] JP 2021-050556 A

### [Summary of Invention]

### [Problems to be Solved by the Invention]

From the standpoint of security, a complex equation or a pseudo-random number may be used to generate a one-time code, but there is a problem in that a method of generating such an equation or a pseudo-random number has to be considered and kept secret. Furthermore, with a method that is dependent on a mathematical method such as prime factorization, by which an answer that is invariably uniquely determined can be logically calculated (but which requires a massive amount of computing), there is a problem in that it is difficult to maintain security in the case in which computing capacity greatly increases, as in the case of quantum computing.

In view of such a situation, an object of the present invention is to efficiently generate a highly secure one-time code.

### [Means for Solving the Problems]

To achieve the object described above, a one-time code generation apparatus according to the present invention is provided in a subject vehicle, the one-time code generation apparatus including an acquisition unit for acquiring information of at least one of a peripheral vehicle and a roadside unit present in a periphery of the subject vehicle; and a one-time code generation unit for generating a one-time code using the information that is acquired by the acquisition unit.

### [Advantageous Effect of Invention]

According to the present invention, a highly secure one-time code may be efficiently generated.

### [Brief Description of Drawings]

[Figure 1] Figure 1 is an explanatory diagram showing a one-time code system.
[Figure 2] Figure 2 is a block diagram showing functional units of a vehicle.
[Figure 3] Figure 3 is a block diagram showing functional units of an information management server.
[Figure 4] Figure 4 is a flowchart showing a flow of generation of a one-time code.
[Figure 5] Figure 5 is a flowchart showing use of a generated one-time code.
[Figure 6] Figure 6 is an explanatory diagram showing another mode.
[Figure 7] Figure 7 is a flowchart showing a flow of processes according to another mode.
[Figure 8] Figure 8 is a block diagram showing an example of a hardware configuration of a computer.

### [Mode for Carrying Out the Invention]

Hereinafter, the present invention will be described based on an illustrated embodiment. However, the present invention is not limited by the embodiment described below.

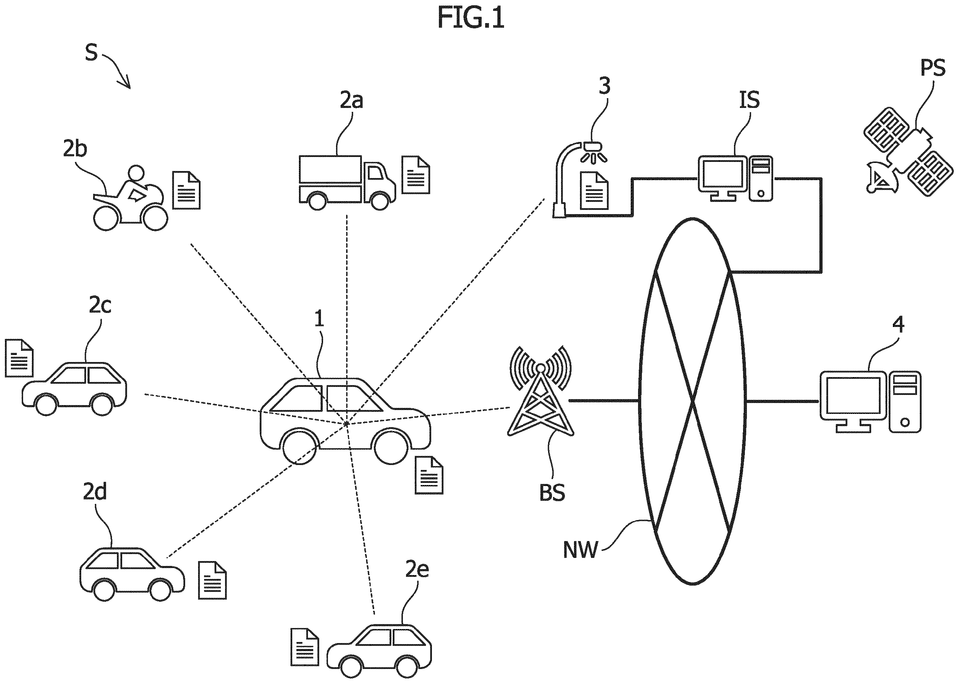

As shown in Figure 1, a one-time code generation system S includes a subject vehicle 1, vehicles 2a to 2e that are different from the subject vehicle 1, a roadside unit 3 that is a kind of smart infrastructure, and an information management server 4. The subject vehicle 1 includes a one-time code generation apparatus for generating a one-time code. The one-time code is used to check authenticity of communication between the subject vehicle 1 and the information management server 4.

The subject vehicle 1 and the vehicles 2a to 2e are connected cars. The subject vehicle 1 is capable of performing vehicle-to-vehicle communication (V2V communication) with the vehicles 2a to 2e in the case in which the vehicles 2a to 2e are in a periphery of the subject vehicle 1. Furthermore, the subject vehicle 1 is capable of performing vehicle-to-infrastructure communication (V2I communication) with the roadside unit 3 in the case in which the roadside unit 3 is in the periphery of the subject vehicle 1. The subject vehicle 1 is also capable of performing communication with the information management server 4 via a base station BS and a network NW.

The roadside unit 3 is capable of performing communication with the information management server 4 via a roadside unit management server IS for managing the roadside unit 3 and the network NW.

Moreover, the subject vehicle 1 and the vehicles 2a to 2e are each capable of determining a current position based on a signal transmitted from a positioning satellite PS of a global navigation satellite system (GNSS).

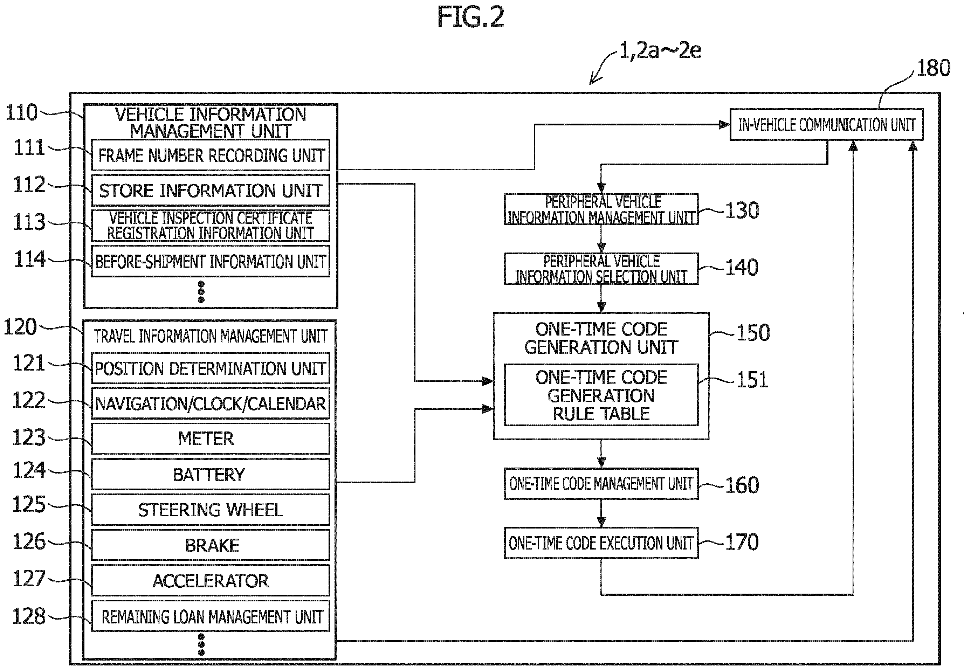

As shown in Figure 2, the one-time code generation apparatus mounted in the subject vehicle 1 includes a vehicle information management unit 110, a travel information management unit 120, a peripheral vehicle information management unit 130, a peripheral vehicle information selection unit 140, a one-time code generation unit 150, a one-time code management unit 160, a one-time code execution unit 170, and an in-vehicle communication unit 180.

The vehicle information management unit 110 is a functional unit for managing and recording static information that does not change by use of the vehicle. The vehicle information management unit 110 includes a frame number recording unit 111 in which a frame number (a chassis number) is recorded, a store information unit 112 in which information about a store in which the subject vehicle was sold is recorded, a vehicle inspection certificate registration information unit 113 in which registration information about a vehicle inspection certificate is recorded, and a shipping information unit 114 in which mileage immediately after shipment from a factory is recorded.

The travel information management unit 120 is a functional unit for managing, in association with time, information that dynamically changes, such as a traveling speed of the vehicle, a current position of the vehicle, and the like. Such information may be transmitted to a server after the one-time code is generated, and does not have to be recorded in the vehicle. The travel information management unit 120 includes a position determination unit 121 for determining the current position by communicating with the positioning satellite PS, and a navigation-clock-calendar 122. The navigation-clock-calendar 122 is a collection of a car navigation system, a radio clock, and an electronic calendar. The travel information management unit 120 further includes a meter unit 123 for recording a vehicle speed, a battery recording unit 124 for recording a remaining battery capacity of the subject vehicle, a steering wheel recording unit 125 for recording movement of a steering wheel of the subject vehicle, a brake recording unit 126 for recording an amount of operation on a brake of the subject vehicle, an accelerator recording unit 127 for recording an amount of operation on an accelerator of the subject vehicle, and a remaining loan management unit 128 for managing a remaining loan for the subject vehicle.

The peripheral vehicle information management unit 130 is a functional unit for managing information about a peripheral vehicle that is present in the periphery of the subject vehicle. Such information is used only to generate the one-time code, and may be deleted after the one-time code is generated.

The peripheral vehicle information selection unit 140 is a functional unit for selecting information to be used for generation of the one-time code, from a collection of information about peripheral vehicles managed by the peripheral vehicle information management unit 130.

The one-time code generation unit 150 is a functional unit for generating the one-time code based on the information selected by the peripheral vehicle information selection unit 140 and a one-time code generation rule table 151.

The one-time code management unit 160 is a functional unit for managing the one-time code that is generated by the one-time code generation unit 150.

The one-time code execution unit 170 is a functional unit for using the one-time code that is managed by the one-time code management unit 160.

The in-vehicle communication unit 180 is a functional unit for performing communication with another vehicle. The in-vehicle communication unit 180 may also be referred to as an acquisition unit for acquiring information from another vehicle.

Additionally, the vehicles 2a to 2e also include the same functional units as the subject vehicle 1.

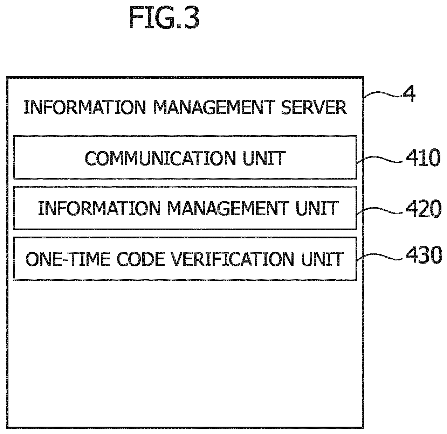

As shown in Figure 3, the information management server 4 includes a communication unit 410, an information management unit 420, and a one-time code verification unit 430. The communication unit 410 is a functional unit for performing communication with a vehicle. The information management unit 420 is a functional unit for managing information that is transmitted from each one of the vehicles 1 and 2a to 2e connected cars. The one-time code verification unit 430 is a functional unit for performing verification of the one-time code.

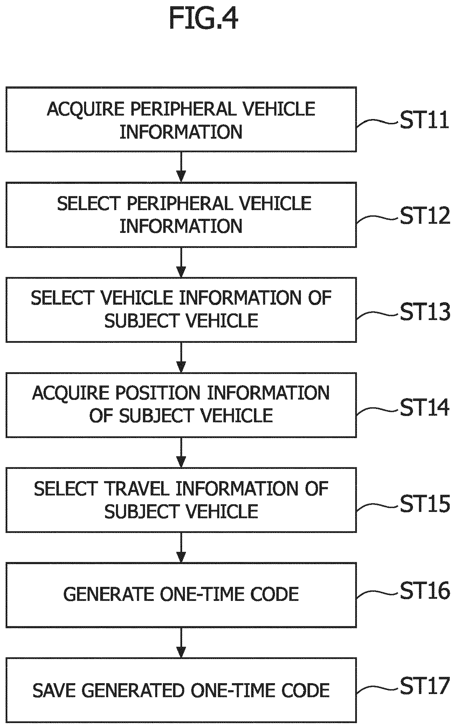

Figure 4 shows a flow of generation of the one-time code.

First, in step ST11, the peripheral vehicle information management unit 130 acquires peripheral vehicle information through the in-vehicle communication unit 180.

In step ST12, the peripheral vehicle information selection unit 140 selects the peripheral vehicle information to be used for generation of the one-time code.

In step ST13, the one-time code generation unit 150 selects vehicle information about the subject vehicle to be used for generation of the one-time code. The vehicle information may be acquired from the vehicle information management unit 110. As the vehicle information, a license plate, a travel history of the vehicle, or the like may be used.

In step ST14, the one-time code generation unit 150 acquires position information of the subject vehicle to be used for generation of the one-time code. The position information may be acquired from the position determination unit 121.

In step ST15, the one-time code generation unit 150 acquires travel information (including the position information and time) of the subject vehicle to be used for generation of the one-time code. The travel information may be acquired from the travel information management unit 120.

In step ST16, the one-time code generation unit 150 generates the one-time code based on the peripheral vehicle information, the vehicle information of the subject vehicle, and the travel information of the subject vehicle, and according to one of rules described in the one-time code generation rule table 151.

The one-time code generation rule table 151 previously stores a plurality of one-time code generation rules setting a range and an order of combination of numbers including mileage of the subject vehicle, date/time, latitude, longitude, altitude, frame number, remaining amount of residual value payment, year registered, an order of north latitude of the store of purchase, a postal code of registered address of the vehicle, and the like. The one-time code generation rules may be shared with the information management server 4 at the time of shipment of the vehicle, or in the case in which the one-time code generation rules are not shared, the information management server 4 may take a brute-force approach or perform a search in relation to past vehicle information.

In step ST17, the one-time code management unit 160 saves the one-time code that is generated in step ST16.

The longer the one-time code is, the more difficult it is to decipher, and the greater the number of patterns (the number of generation rules), the more difficult the deciphering.

Even if the one-time code generation rule table 151 leaks out, a correct one-time code cannot be obtained unless an internal state of the vehicle and information about the peripheral vehicle at the time of generation of the one-time code are not known.

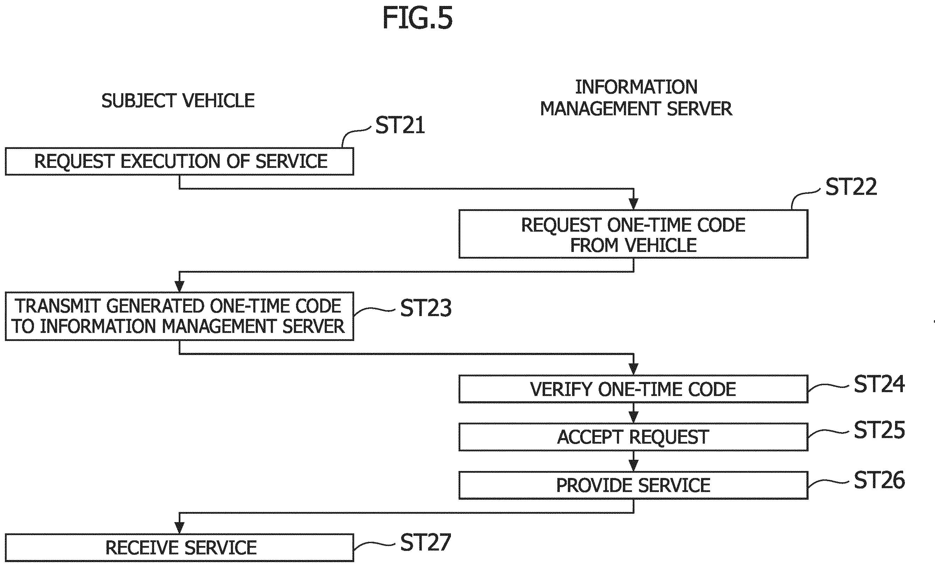

Figure 5 shows a flow of execution and verification of the one-time code.

First, in step ST21, the one-time code execution unit 170 requests execution of a service. The request is transmitted to the one-time code verification unit 430 through the in-vehicle communication unit 180 of the subject vehicle and the communication unit 410 of the information management server 4.

In step ST22, the one-time code verification unit 430 requests the one-time code from the subject vehicle. The request is transmitted to the one-time code execution unit 170 through the communication unit 410 of the information management server 4 and the in-vehicle communication unit 180 of the subject vehicle.

In step ST23, the one-time code execution unit 170 transmits the one-time code that is already generated to the information management server 4 through the in-vehicle communication unit 180. The one-time code is transmitted to the one-time code verification unit 430 through the communication unit 410 of the information management server 4.

In step ST24, the one-time code verification unit 430 performs verification of authenticity of the one-time code that is transmitted from the subject vehicle 1. More specifically, the one-time code verification unit 430 determines whether the one-time code can be generated based on the vehicle information (including information about the peripheral vehicle) managed by the information management unit 420 up to the point and the one-time code generation rule table that is shared in advance with the subject vehicle 1. In the case in which it is determined that the one-time code can be generated, the one-time code verification unit 430 determines that the one-time code is authentic, and step ST25 described below is then performed. In the case in which it is determined that the one-time code cannot be generated, the one-time code verification unit 430 determines that the one-time code is not authentic, and the present process is ended.

In step ST25, the one-time code verification unit 430 accepts the request in step ST21.

In the subsequent step ST26, the information management server 4 provides the service to the subject vehicle, and the subject vehicle receives provision of the service from the information management server 4 in step ST27.

According to the embodiment described above, the one-time code may be generated according to a vehicle that is present in a periphery of a traveling vehicle. Moreover, the following effects may be obtained.
- Because a pseudo-random number is not used, there is no need to keep secret a generation program code or an equation for the pseudo-random number.
- Even if the program or the generation rule table for one-time code generation is leaked out, the same one-time code cannot be generated unless the peripheral vehicle is the same at a certain time. Accordingly, it is difficult to reproduce the one-time code in an ex-post manner, and high security may be achieved.
- When stuck in a traffic jam, stopped in a parking lot, or traveling in a region where there are not many connected cars in the periphery, for example, a one-time code that is the same as, or similar to, the one generated in the past is possibly generated based on behavior of the vehicle. By not generating a one-time code in such a situation, generation of a duplicate one-time code may be efficiently prevented.
- A generated one-time code may be temporarily shared between unrelated vehicles of strangers that are in the vicinity of each other and that assembled at a specific location on a specific date/time by coincidence.
- Verification of authenticity or reproduction of the one-time code may be performed only by the information management server collecting information about all the connected cars, and verification by other methods is difficult. That is, high security is achieved.
- For a third party to obtain the same one-time code, the third party has to be close to a target traveling vehicle at all times. Accordingly, difficulty for a malicious party to obtain the one-time code may be increased, and thus, security may be increased.
- Not only at the time of acquisition of the one-time code, but also at the time of a malicious party using the one-time code after successfully stealing the one-time code from a traveling vehicle, the information management server may disable use of the one-time code by the malicious party at a place different from current position information of a legitimate vehicle that generates/uses the one-time code. The malicious party has to be at the same position as the current position information of the legitimate vehicle not only at the time of obtaining the one-time code from the traveling vehicle, but also at the time of using the one-time code. Accordingly, usability after the one-time code is stolen by the malicious party may be greatly reduced, and thus, security may be increased.
- Verification of authenticity of the one-time code does not necessarily have to be performed in real-time, and the information management server may retrospectively perform verification of a past one-time code. Accordingly, in the case in which a traveling vehicle is able to communicate with the information management server, it is possible to generate as many one-time codes as possible in a travel environment that satisfies one-time code generation conditions, regardless of whether the one-time code is necessary or not, and a one-time code that is generated in the past may be used as necessary.
- Like the information management server, when a malicious party wants to submit a certain false one-time code, the malicious party has to copy/hold/manage a massive amount of vehicle data about all the connected cars managed by the system, over a very long period of time from past to present at high cost and using a large amount of labor. That is, the cost of falsifying the one-time code is high, and high crime prevention effect is achieved.
- With an ordinary one-time code, general services may be used by inputting the one-time code to a terminal or the like within a specific period of time, but when a driver inputs the one-time code to the terminal or the like during driving, this gets in the way of safe driving. Because the vehicle itself may generate the one-time code and the verification by the server may be automatically received, exchange of the one-time code may be performed without a driving operation being hindered during traveling, and this is convenient for the driver. That is, instead of the driver inputting the one-time code to the terminal or the like to perform verification, the server verifies correctness of the one-time code. Because manual input by the driver is not performed, degree of freedom is high in relation to the number of digits in the one-time code (that is, the number of digits may be increased), and also, letters that are burdensome for the driver to input may be used in the one-time code in addition to the numbers, and there is an advantageous effect that complexity of the one-time code may be increased. Moreover, by using a plurality of one-time codes that are generated by combinations of different information pieces, a high crime prevention effect may be achieved.

Moreover, the embodiment described above is advantageous in that the embodiment is dependent on a once-in-a-lifetime event (coincidence) between vehicles and that the code is not determined based solely on logical computation. To break a code that is obtained in the above manner, not only is computing capacity required, but also data has to be held in at least the same amount as by the information management server 4, and thus, high cost is required to perform breaking (hacking). That is, the code according to the embodiment described above is highly secure.

The one-time code to be used at the time of communication is invalidated after a certain period of time even when it was not used or after being used only once, and thus, security may be increased. In the case in which a pseudo-random number or a mathematical equation is used to generate the one-time code, measures must be taken to prevent the same random number from being generated several times by chance, and the equation and the program code have to be kept secret. If the server that generates the one-time code is hacked, or the program code leaks out, the same one-time code may be easily acquired.

The embodiment described above uses a plurality of vehicles that are provided with a V2V function, and the one-time code is generated by a traveling (and temporarily stopped) vehicle based on information about the peripheral vehicles that change over time. The other parties of communication with the subject vehicle are not limited to vehicles/mobile objects, and may include smart infrastructure having a V21 function (such as an electricity pole, a telephone pole, a traffic light, a street light, a surveillance camera, an ETC device, and the like) fixed near a travel route of the subject vehicle.

### Other Embodiments

The vehicle information that is used to generate the one-time code is not limited to the frame number, and it may be information that changes according to an owner of the vehicle, such as an insurance policy number or a license plate. Any information that can be collected by both the subject vehicle 1 and the information management server 4 may be used to generate the one-time code for the subject vehicle 1.

As the vehicle information that is used to generate the one-time code, a travel history (mileage, date/time, latitude, longitude, altitude) of the vehicle may be used. Here, the travel history (mileage, date/time, latitude, longitude, altitude) of the vehicle immediately after shipment from a factory is not recorded in computers other the information management server and a vehicle main body, and is also not recorded or changed outside the premises of the factory that is managed, and it can be said to be information with relatively high confidentiality. Accordingly, when the travel history (mileage, date/time, latitude, longitude, altitude) immediately after shipment from the factory is used, it is not necessary to communicate all the one-time codes at the time of exchanging the one-time codes between the traveling vehicle and the information management server, and confidentiality of the one-time code may be increased. With respect to the travel history (mileage, date/time, latitude, longitude, altitude) that is recorded immediately after shipment from the factory, the travel history is recorded before shipment, in a state in which it is not known who will purchase which vehicle. In particular, in a case in which a malicious party targets the vehicle of a specific person and tries to falsify the one-time code, the malicious party has to grasp not only the one-time code but also the travel history (mileage, date/time, latitude, longitude, altitude) that is recorded immediately after shipment from the factory, of vehicles that will possibly be purchased by the specific person, and this is effective as a crime prevention measure.

The travel history immediately after shipment from the factory mentioned above is shared between the traveling vehicle and the information management server before arrival at a purchaser. The travel history can be said to be similar to a common key that is exchanged in advance. In an example of use of the travel history immediately after shipment from the factory, at the time of communicating the one-time code after the vehicle is sold, some kind of operation that is based on the travel history immediately after shipment from the factory is applied to a part of the one-time code (excluding a part specifying the vehicle, such as a frame number), and a description to that effect is given in the rule table, for example. Because the mileage of a vehicle immediately after shipment from a factory is recorded in advance, the information management server may easily perform decoding based on the rule table if the vehicle can be identified. A malicious party cannot know that "some kind of process that is based on the mileage immediately after shipment from the factory is partially applied" to a certain one-time code that is obtained, and also, at the time of acquiring individual vehicle information at a certain time and generating the one-time code, the malicious party has to somehow obtain the travel history immediately after shipment from the factory that is different for each vehicle, and the rule table, and perform a correct process. Like the rule table, the travel history immediately after shipment from the factory does not necessarily have to be communicated, and it is thus not easily obtained after shipment, and security of the one-time code is increased.

A selection condition for a peripheral vehicle does not have use an ascending order of specific digits of frame numbers. For example, selection may be performed based on a clockwise order of position coordinates of peripheral vehicles, a descending order of mileage, a descending order of vehicle speeds, a descending order of remaining amounts of residual value payment, a chronological order of years registered, a descending order of north latitude of stores where vehicles were purchased, an order of postal codes of addresses where vehicles are registered, and the like. Selection may be performed based on information that is managed by the information management server. Furthermore, the crime prevention effect may be increased by changing the vehicle selection condition every time the one-time code is generated.

The one-time code may be generated using, in addition to the information about the peripheral vehicle, information that is saved by smart infrastructure (a pole management number, year of construction, year/month/day of previous maintenance, power consumption, amount of power generation, latitude/longitude of installation position), by performing vehicle-to-infrastructure communication (V2I communication) with a roadside unit (smart infrastructure) or a smartphone which the subject vehicle temporarily passes by. Unlike the information about a vehicle that is managed/sold/purchased by individuals, information of infrastructure is managed by a specific party different from the vehicle and the information management server, and malicious rewriting of the information from outside is burdensome. The crime prevention effect is further increased.

Even in a region where density of vehicles is relatively low, such as in the countryside, if there is sufficient smart infrastructure, the one-time code may be generated using information from such smart infrastructure.

In the case in which the vehicle is in a region outside a range of a mobile telephone line network and is not able to immediately connect to the information management server, a line that is connected to a wired network for the purpose of smart infrastructure management or the like may be used.

In the case in which smart infrastructure is included as a counterpart with which a generated one-time code is to be shared, smart infrastructure having sufficient security may save the one-time code that is shared. In the case in which smart infrastructure is in a blockchain and operates a ledger that is managed, saving the one-time code in the ledger in the blockchain makes alteration of the one-time code difficult, and there is an advantageous effect that the crime prevention effect is increased.

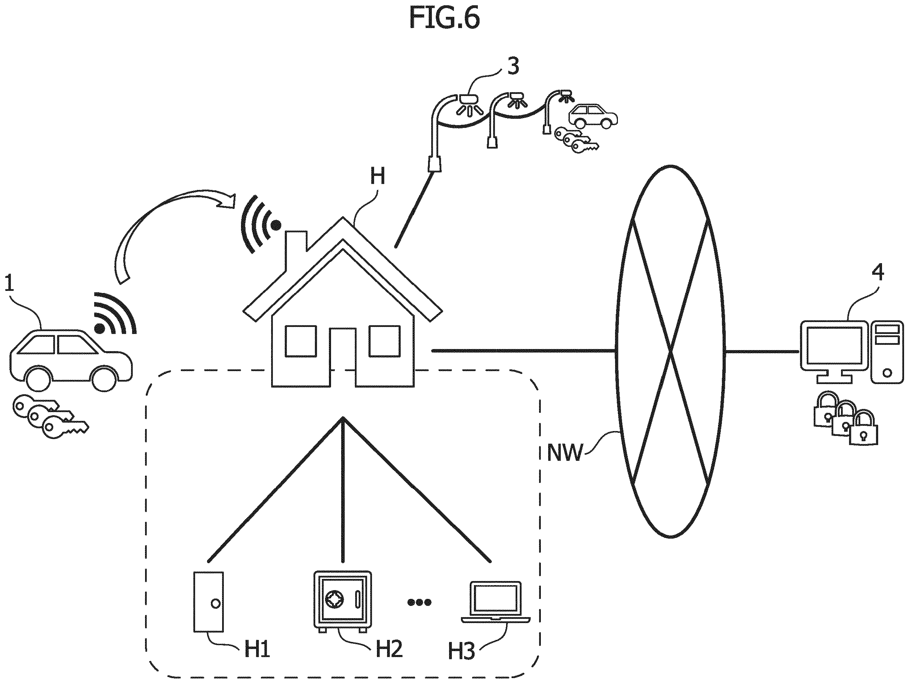

As shown in Figure 6, a one-time code that is generated may be used by an appliance that is connected to a network in a smart home H that can be connected to the vehicle 1 and the information management server 4. For example, the one-time code that is generated may be used as a key to a door H1 or a key to a safe H2 or to log into a personal computer H3 of an individual, and verification of authenticity by the information management server may be performed. This enables an appliance connected to the network to be locked or unlocked before home is reached. There is an advantageous effect that use of an appliance may be managed and that unnecessary use may be prevented even before home is reached. Alternatively, the one-time code that is generated may be used by an appliance that is connected to the network via smart infrastructure 3, before the vehicle 1 connects to the smart home H.

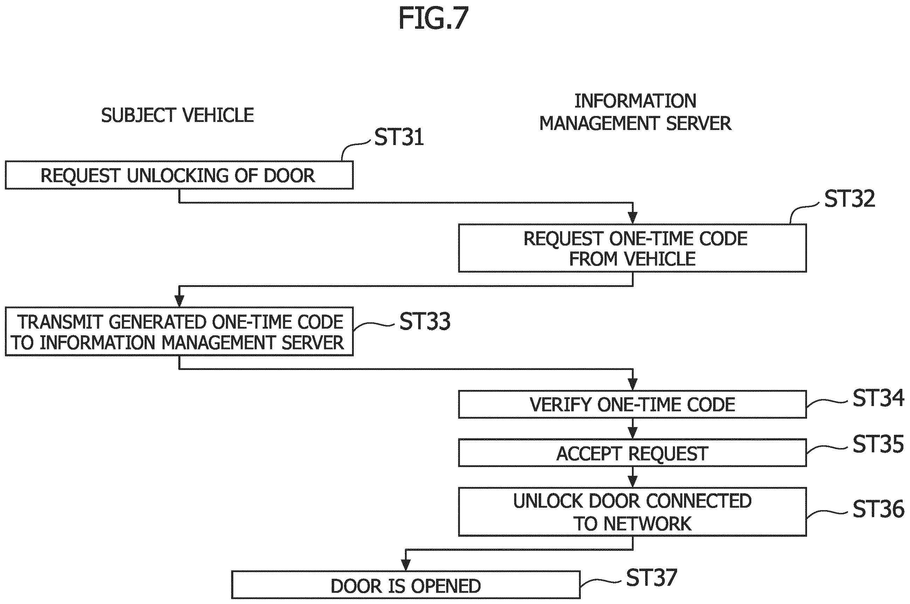

Figure 7 shows another example of execution and verification of the one-time code.

First, in step ST31, the one-time code execution unit 170 requests unlocking of the door H1. The request is transmitted to the one-time code verification unit 430 through the in-vehicle communication unit 180 of the subject vehicle and the communication unit 410 of the information management server 4.

In step ST32, the one-time code verification unit 430 requests the one-time code from the subject vehicle. The request is transmitted to the one-time code execution unit 170 through the communication unit 410 of the information management server 4 and the in-vehicle communication unit 180 of the subject vehicle.

In step ST33, the one-time code execution unit 170 transmits the one-time code that is already generated to the information management server 4 through the in-vehicle communication unit 180. The one-time code is transmitted to the one-time code verification unit 430 through the communication unit 410 of the information management server 4.

In step ST34, the one-time code verification unit 430 performs verification of authenticity of the one-time code that is transmitted from the subject vehicle 1. More specifically, the one-time code verification unit 430 determines whether the one-time code can be generated based on the vehicle information (including information about the peripheral vehicle) managed by the information management unit 420 up to the point and the one-time code generation rule table that is shared in advance with the subject vehicle 1. In the case in which it is determined that the one-time code can be generated, the one-time code verification unit 430 determines that the one-time code is authentic, and step ST35 described below is then performed. In the case in which it is determined that the one-time code cannot be generated, the one-time code verification unit 430 determines that the one-time code is not authentic, and the present process is ended.

In step ST35, the one-time code verification unit 430 accepts the request in step ST31.

In the subsequent step ST36, the information management server 4 transmits, to the door H1, a command to unlock the door, through the network NW and the network in the smart home H, and the door H1 is unlocked in step ST37.

The one-time code may be generated not only by the vehicle that is traveling, but also by a smartphone or the like during movement.

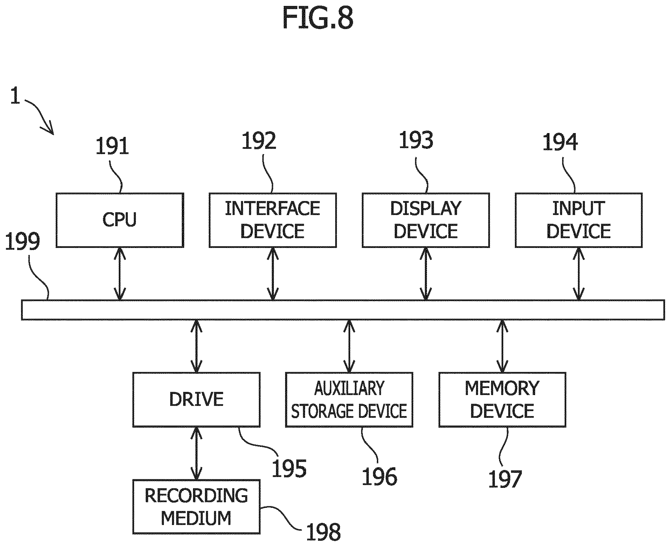

Figure 8 shows an example of a computer hardware configuration of the one-time code generation apparatus that is mounted in the subject vehicle 1. The present apparatus includes a CPU 191, an interface device 192, a display device 193, an input device 194, a drive 195, an auxiliary storage device 196, and a memory device 197, and these are interconnected by a bus 199.

A program for implementing the function of the present apparatus is provided by a recording medium 198 such as a CD-ROM. When the recording medium 198 recording the program is set in the drive 195, the program is installed from the recording medium 198 into the auxiliary storage device 196 via the drive 195. Alternatively, installation of the program does not necessarily have to be performed by the recording medium 198, and it may be performed via a network. The auxiliary storage device 196 stores the program that is installed, and also stores necessary files, data and the like.

When there is an instruction to activate the program, the memory device 197 reads the program from the auxiliary storage device 196 and stores the same. The CPU 191 implements the function of the one-time code generation apparatus according to the program that is stored in the memory device 197. The interface device 192 is used as an interface for connecting to another computer via a network. The display device 193 displays a graphical user interface (GUI) or the like according to the program. The input device 194 is a keyboard, a mouse, a touch panel, and the like.

Additionally, the peripheral vehicles 2a to 2e, the smart infrastructure 3, the information management server 4, and the smart infrastructure management server IS also have the same computer hardware configuration as the one-time code generation apparatus.

The following supplementary notes are disclosed in relation to the embodiment described above.

### Supplementary Note 1

A one-time code generation apparatus provided in a subject vehicle, the one-time code generation apparatus including:
an acquisition unit for acquiring information of at least one of a peripheral vehicle and a roadside unit present in a periphery of the subject vehicle; and
a one-time code generation unit for generating a one-time code using the information that is acquired by the acquisition unit.

### Advantageous Effect 1

Vehicles in the periphery of the subject vehicle are highly likely to change when the subject vehicle travels. Even if the generation rule for the one-time code is leaked to a third party, it is difficult to reproduce, in an ex-post manner, a state of the periphery of the subject vehicle that may change over time. Accordingly, a highly secure one-time code may be easily generated.

### Supplementary Note 2

The one-time code generation apparatus according to Supplementary Note 1, further including:
a one-time code management unit for managing, in association with each other, each of a plurality of one-time codes generated by the one-time code generation unit and a time of generation of the each of the plurality of one-time codes; and
a one-time code execution unit for using at least one of the plurality of one-time codes managed by the one-time code management unit.

### Advantageous Effect 2

By using a one-time code that is generated and saved in advance and that is not yet used, or by using, in combination, a plurality of one-time codes that are generated and saved in advance and that are not yet used, instead of using, in real time, a one-time code that is generated, the crime prevention effect may be further increased.

### Supplementary Note 3

The one-time code generation apparatus according to Supplementary Note 2, in which, in a case in which a total number of the peripheral vehicle and the roadside unit that are present within a predetermined range of the subject vehicle and that are capable of performing communication with the subject vehicle is equal to or less than a predetermined number, the one-time code execution unit uses at least one of the plurality of one-time codes that are generated in advance by the one-time code generation unit and that are managed by the one-time code management unit.

### Advantageous Effect 3

In a situation in which it is difficult to generate a one-time code that is not a duplicate of a one-time code generated in the past, a one-time code that was generated in the past but that is not yet used may be used instead of generating the one-time code.

### Supplementary Note 4

The one-time code generation apparatus according to Supplementary Note 2 or 3, in which, in a case in which a speed of the subject vehicle is equal to or less than a predetermined value, the one-time code execution unit uses at least one of the plurality of one-time codes that are generated in advance by the one-time code generation unit and that are managed by the one-time code management unit.

### Advantageous Effect 4

In the case in which the speed of the subject vehicle is equal to or less than the predetermined value, there is a possibility that a one-time code that is a duplicate of a one-time code generated in the past is generated. Accordingly, in such a situation, a one-time code that was generated in the past, but that is not yet used, may be used instead of generating the one-time code.

Heretofore, an embodiment of the present invention has been described, but the present invention is not limited to the embodiment described above, and various modifications and changes may be made based on the technical concept of the present invention.

### [Reference Signs List]

- S: One-time code generation system
- 1: Subject vehicle
- 110: Vehicle information management unit
- 120: Travel information management unit
- 130: Peripheral vehicle information management unit
- 140: Peripheral vehicle information selection unit
- 150: One-time code generation unit
- 160: One-time code management unit
- 170: One-time code execution unit
- 180: In-vehicle communication unit
- 2a, ..., 2e: Peripheral vehicle
- 3: Roadside unit
- 4: Information management server
- 410: Communication unit
- 420: Information management unit
- 430: One-time code verification unit

## Claims

1. A one-time code generation apparatus provided in a subject vehicle, **characterized in** comprising:
an acquisition unit for acquiring information of at least one of a peripheral vehicle and a roadside unit present in a periphery of the subject vehicle; and
a one-time code generation unit for generating a one-time code using the information that is acquired by the acquisition unit.

2. The one-time code generation apparatus as claimed in claim 1, wherein further comprising:
a one-time code management unit for managing, in association with each other, each of a plurality of one-time codes generated by the one-time code generation unit and a time of generation of the each of the plurality of one-time codes; and
a one-time code execution unit for using at least one of the plurality of one-time codes managed by the one-time code management unit.

3. The one-time code generation apparatus as claimed in claim 2, wherein, in a case in which a total number of the peripheral vehicle and the roadside unit that are present within a predetermined range of the subject vehicle and that are capable of performing communication with the subject vehicle is equal to or less than a predetermined number, the one-time code execution unit uses at least one of the plurality of one-time codes that are generated in advance by the one-time code generation unit and that are managed by the one-time code management unit.

4. The one-time code generation apparatus as claimed in claim 2 or 3, wherein, in a case in which a speed of the subject vehicle is equal to or less than a predetermined value, the one-time code execution unit uses at least one of the plurality of one-time codes that are generated in advance by the one-time code generation unit and that are managed by the one-time code management unit.
